# EUROPÄISCHE PATENTSCHRIFT

(11) **EP 1 393 984 B1**
(45) Veröffentlichungstag und Bekanntmachung des Hinweises auf die Patenterteilung: **17.01.2007**
(21) Anmeldenummer: 03018779.3
(22) Anmeldetag: 28.08.2003
(51) Int. Cl.: B60R 16/02, H01B 11/06, H01B 11/10, F16D 65/27

(54) **Elektrische Verkabelung eines Fahrzeugs**
Electric wiring of a vehicle
Câblage électrique d'un véhicule

(30) Priorität: 29.08.2002 DE 10239695
(43) Veröffentlichungstag der Anmeldung: 03.03.2004
(73) Patentinhaber: KNORR-BREMSE Systeme für Schienenfahrzeuge GmbH, 80809 München (DE)
(72) Erfinder: Friesen, Ulf, 81739 München (DE)

(56) Entgegenhaltungen:
- EP-A- 0 685 239
- WO-A-01/91137
- WO-A-94/20968
- GB-A- 502 122
- US-A1- 2001 054 123

## Beschreibung

### Stand der Technik

Die Erfindung geht aus von einer elektrischen Verkabelung eines Schienenfahrzeugs, nach der Gattung des Patentanspruchs 1.

Ein Beispiel, bei welchem eine solche Verkabelung eingesetzt werden kann, ist in der DE 199 45 701 A1 beschrieben. Diese Schrift offenbart eine elektromechanische Bremszuspanneinrichtung für Schienenfahrzeuge mit einem Bremsaktuator, der eine Betriebsbremseinheit sowie eine Speicherbremseinheit mit einem Energiespeicher umfaßt. Die Betriebsbremseinheit beinhaltet einen Bremskrafterzeuger zum Zuspannen und/oder Lösen der Bremse in Form eines elektromotorischen Antriebs. Die Speicherbremseinheit umfaßt mindestens einen Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Die Speicherbremseinheit ist im allgemeinen als Federspeicherbremse ausgebildet. Ein Kraftumsetzer sorgt für eine Umsetzung der vom Bremskrafterzeuger und/oder vom Energiespeicher abgegebenen Energie in eine Bremszuspannbewegung. Der elektromotorische Antrieb ist meist durch eine Regelungs- und Leistungselektronik zu schlupfgeregelten (Gleitschutzregelung) und/oder lastkorrigierten Bremsungen ansteuerbar. Eine solche Bremszuspanneinrichtung ist üblicherweise an einem Drehgestell eines Wagens des Schienenfahrzeugs befestigt, so daß eine Reihe von elektrischen Kabeln und/oder Lichtwellenleitern vorhanden sind, um die Bremszuspanneinrichtung mit zugeordneten Steuer-, Signalgeber- und/oder Energieversorgungseinrichtungen zu verbinden, welche nicht in unmittelbarer Nachbarschaft der Bremszuspanneinrichtung sondem in einem Wagen des Schienenfahrzeugzuges angeordnet sind. Unter anderem werden durch diese Kabel beispielsweise folgende Funktionen übernommen:
- Die Energieversorgung eines Leistungsteils der Bremszuspanneinrichtung zum Auf- bzw. zum Abbau der Zuspannkraft;
- die Energieversorgung der Steuerung und Regelung der Bremszuspanneinrichtung;
- die Übermittlung von Steuersignalen wie beispielsweise das momentane Bremsanforderungssignal, Signale zum Auslösen der Parkbremsfunktion, zum Auslösen der Hilfsbremsfunktion etc.;
- die Übermittlung von Sensorsignalen wie beispielsweise die Signale eines Impulsgebers zur Ermittlung der Raddrehzahl oder von Endlagenschaltern;
- die Übermittlung von Diagnosedaten.

Einerseits besteht der Wunsch, diese elektrischen Kabel gegen elektromagnetische Störungen abzuschirmen. Hierzu muß die Abschirmung an Masse anliegen bzw. geerdet sein. Andererseits sollen jedoch die Signalübertragung störende Potentialausgleichsströme zwischen der Masse des die Steuer-, Signalgeber- und/oder Energieversorgungseinrichtungen beherbergenden Wagens und der Masse der Bremszuspanneinrichtung bzw. des Drehgestells verhindert werden. Solche Ströme können in Extremfällen zu einer Beschädigung der Kabel führen.

Ein gattungsgemäße elektrische Verkabelung eines Schienenfahrzeugs ist aus der US 2001/0054123 A1 bekannt. Ein Sammelkabel mit einer Gesamtabschirmung und mit innerhalb dieser angeordneten Kabelsträngen mit jeweils einer Einzelabschirmung ist auch aus der WO 01/91137 A2 bekannt.

Der vorliegenden Erfindung liegt die Aufgabe zugrunde, eine elektrische Verkabelung der eingangs erwähnten Art zur Verfügung zu stellen, welche einerseits eine gute Abschirmung gegen elektromagnetische Störungen gewährleistet und andererseits bezüglich der Einbausituation in Schienenfahrzeugen besondere Vorteile bietet.

Erfindungsgemäß wird diese Aufgabe durch die kennzeichnenden Merkmale des Anspruchs 1 gelöst.

### Vorteile der Erfindung

Aufgrund des Vorhandenseins von Einzelabschirmungen und der diese umgebenden Gesamtabschirmung ist zum einen eine doppelte und damit äußerst wirksame Abschirmung der im Sammelkabel zusammengefaßten elektrischen Kabel gegen äußere elektromagnetische Störungen gegeben. Zum andern werden die mit einer Einzelabschirmung versehenen Kabel oder Kabelgruppen gegen elektromagnetische Störungen geschützt, welche auf elektrischen Strömen basieren, die durch die weiteren, im Sammelkabel vorhandenen Kabel fließen.

Zusätzlich verhindert die isolatorische Trennung der Einzelabschirmungen von der Gesamtabschirmung in Verbindung mit den jeweils nur einseitig an die Masse des Drehgestells oder des Wagens vorhandenen Anschlüsse, daß durch die Abschirmungen eine elektrisch leitende Verbindung zwischen der Masse des Wagens und der Masse des Drehgestells entsteht. Folglich können über die Abschirmungen keine Potentialausgleichsströme aufgrund von unterschiedlichen Potentialen des Wagens und des Drehgestells laufen, welche vor allem digitale Signale eines Datenbusses und die Sensorsignale empfindlich stören.

Weil der Gesamtschirm die Einzelschirme umgibt und dazwischen eine Isolation, d.h. ein Dielektrikum vorhanden ist, ergibt sich zudem eine kapazitive Koppelung des Gesamtschirms mit den Einzelschirmen. Diese kapazitive Kopplung bewirkt in vorteilhafter Weise, daß hochfrequente Störungen abgeleitet werden.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung wird die Isolationsschicht durch Luft und/oder ein anderes Isolationsmaterial und/oder durch einen oder mehrere Kabelmäntel gebildet, innerhalb welchen jeweils eine Gruppe von elektrischen Kabeln geführt ist, wobei wenigstens einige der Kabelmäntel der Gruppen von elektrischen Kabeln mit gegeneinander elektrisch isolierten Einzelabschirmungen versehen sind. Eine solche Anordnung bietet sich vor allem dann an, wenn durch die elektrischen Kabel einer für sich abgeschirmten Gruppe Signale oder Ströme geführt werden, welche nicht gleichzeitig auftreten oder sich nicht gegenseitig beeinflussen. In einem solchen Fall kann auf eine Einzelabschirmung jedes einzelnen Kabels der Gruppe verzichtet werden. Sämtliche elektrischen Kabel und/oder Gruppen von elektrischen Kabeln sind vorzugsweise innerhalb eines Sammelkabelmantels des Sammelkabels geführt, welcher mit der Gesamtabschirmung versehen ist, wobei die Gesamtabschirmung vorzugsweise an der radial inneren Umfangsfläche des Sammelkabelmantels angeordnet ist. Hierdurch ist die Gesamtabschirmung gegen äußere Einflüsse geschützt.

In besonders bevorzugter Anwendung verläuft das Sammelkabel zwischen einem an einem Wagenkasten eines Wagens eines Schienenfahrzeugs angeordneten Anschluß und einer an einem Drehgestell des Wagens angeordneten Bremszuspanneinrichtung und dient zur Verbindung letzterer mit Steuer-, Signalgeber- und/oder Energieversorgungseinrichtungen. Gemäß einer Weiterbildung sind beide Enden des Sammelkabels mittels je einer lösbaren Verbindung am Anschluß des Wagenkastens und an der Bremszuspanneinrichtung befestigt Weil sämtliche Einzelkabel in einem einzigen Sammelkabel mit Steckverbindung zusammengefaßt sind, können die Kabelverbindungen der Bremszuspanneinrichtung mittels lediglich einer einzigen Steckverbindung hergestellt werden, ohne daß hierfür Fachwissen über die Zuordnung und Funktion der einzelnen Kabel notwendig ist. Weiterhin kann die Bremszuspanneinrichtung selbst durch Lösen der Steckverbindung schnell und einfach demontiert und ausgewechselt werden, ohne daß Manipulationen an den Kabelverbindungen durchgeführt werden müßten. Außerdem ist das Sammelkabel kompakt und spart Bauraum.

In besonders zu bevorzugender Weise wird eine wagenseitige lösbare Verbindung und eine bremszuspanneinrichtungsseitige Verbindung durch je eine Steckverbindung gebildet. Beispielsweise sind der Gesamtschirm mittels der bremszuspanneinrichtungsseitigen Steckverbindung an die Masse des Drehgestells und die Einzelschirme mittels der wagenseitigen Steckverbindung an die Masse des Wagenkastens angeschlossen. Entscheidend ist, daß keine elektrisch leitende Verbindung zwischen der Gesamtabschirmung und den Einzelabschirmungen zustande kommt.

Vorzugsweise ist der Gesamtschirm an einer Schirmkabelverschraubung eines Rundsteckers einer Steckverbindung flächig geklemmt, so daß die Abschirmung auch an der Schnittstelle durchgängig und nicht durchbrochen ist.

### Zeichnungen

Ausführungsbeispiele der Erfindung sind in den Zeichnungen dargestellt und in der nachfolgenden Beschreibung näher erläutert In den Zeichnungen zeigt:
- Fig.1: eine schematische Darstellung einer elektromechanischen Bremszuspanneinrichtung;
- Fig.2: eine schematische Darstellung eines bevorzugten Ausführungsbeispiels einer elektrischen Verkabelung zwischen einem an einem Wagenboden angeordneten Klemmkasten und der Bremszuspanneinrichtung von Fig.1 in Form eines Sammelkabels;
- Fig.3: einen Querschnitt durch das Sammelkabel von Fig.2;
- Fig.4: einen Querschnitt durch ein weiteres Sammelkabel;
- Fig.5: eine schematische Darstellung einer bremszuspanneinrichtungsseitigen Kabel-Steckverbindung;
- Fig.6: eine schematische Darstellung einer wagenseitigen Kabel-Steckverbindung.

### Beschreibung der Ausführungsbeispiele

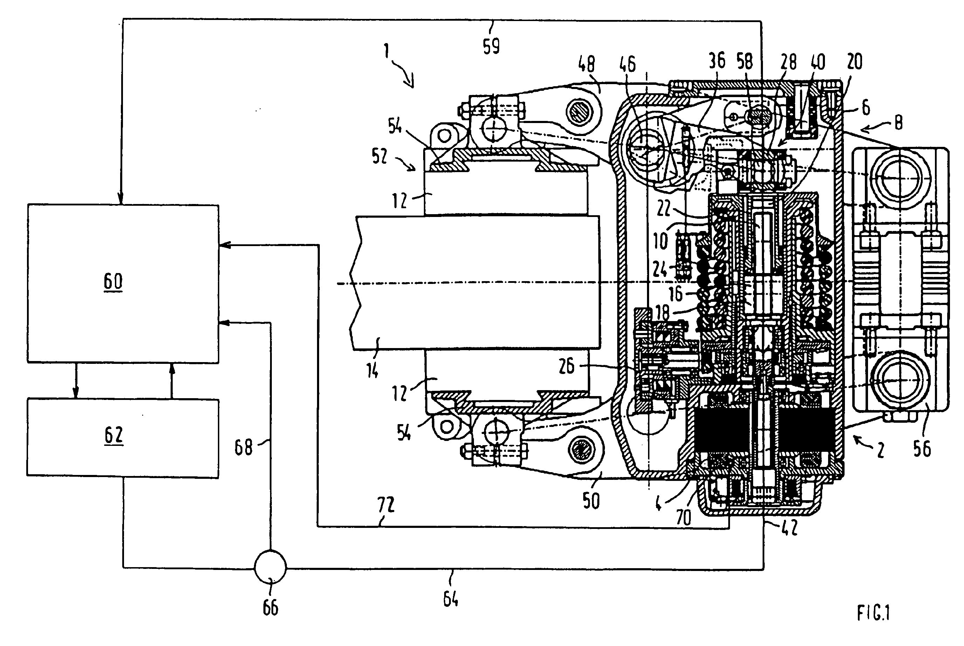

Die in Fig. 1 insgesamt mit 1 bezeichnete, bevorzugte Ausführungsform einer elektromechanischen Bremszuspanneinrichtung bildet eine von mehreren Bremszuspanneinrichtungen eines Schienenfahrzeugs, beispielsweise einer S-Bahn. Die Bremszuspanneinrichtung 1 beinhaltet einen Bremsaktuator 2 mit einer Betriebsbremseinheit und einer Speicherbremseinheit Die Betriebsbremseinheit hat einen elektrischen Antrieb, beispielsweise einen elektrischen Stellmotor 4, der in einem Aktuatorgehäuse 6 des Bremsaktuators 2 untergebracht ist. Ein mechanischer Kraftumsetzer 8 dient zur Umsetzung der vom Bremsaktuator 2 abgegebenen Energie in eine Bremszuspannbewegung.

Der Stellmotor 4 versetzt eine koaxiale Bremsspindel 10 in Drehung, welche durch den Kraftumsetzer 8 in eine Bremszuspannbewegung von Bremsbelägen 12 in Richtung auf eine Wellenbremsscheibe 14 gewandelt werden. Der Kraftumsetzer 8 umfaßt unter anderem eine Mutter-/Spindel-Baueinheit 16 mit einer auf der Bremsspindel 10 drehbar gelagerten Spindelmutter 18, welche bei Drehung der Bremsspindel 10 Linearbewegungen in Richtung der Spindelachse 42 ausführen kann. Das vom Stellmotor 4 abgewandte Ende der Bremsspindel 10 ragt in einen zylindrischen Hohlabschnitt eines Pleuels 20 hinein, der mit der Spindelmutter 18 dreh und axialfest verbunden ist Außerdem ist der zylindrische Hohlabschnitt des Pleuels 20 in einer Schiebehülse 22 dreh- und axialfest gehalten, auf welche wenigstens eine sich am Aktuatorgehäuse 6 abstützende Speicherfeder 24 wirkt Die Speicherfeder 24 ist Teil der Speicherbremseinheit und dient als Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Sowohl die Betriebs- als auch die Speicherbremseinheit wirken auf den Pleuel 20. In Bremslösestellung ist die Speicherfeder 24 durch eine Verriegelungseinrichtung 26 in der vorgespannten Stellung gehalten.

Ein Pleuelkopf 28 des Pleuels 20 ragt aus der Schiebehülse 22 heraus und ist an einem Bremshebel 36 mittels eines Gelenks 40 senkrecht zur Spindelachse 42 angelenkt. Bei Antrieb der Bremsspindel 10 in Bremszuspannrichtung bzw. bei Lösen der Verriegelungseinrichtung 26 der Speicherfeder 24 wird aufgrund des dann axial ausfahrenden Pleuels 20 ein Gelenkbolzen des Gelenks 40 unter anderem durch im wesentlichen senkrecht zur Bolzenachse angreifende Scherkräfte beansprucht.

Das andere Ende des Bremshebels 36 wirkt auf eine Exzenteranordnung mit einer Exzenterwelle 46, die an einen Zangenhebel 48 angelenkt ist, der zusammen mit einem weiteren Zangenhebel 50 eine Bremszange 52 bildet. An den einen Enden der Zangenhebel 48, 50 sind jeweils Belaghalter 54 mit Bremsbelägen 12 angeordnet, die in Richtung der Achse der Wellenbremsscheibe 14 verschieblich sind. Die von den Bremsbelägen 12 abgewandt liegenden Enden der Zangenhebel 48, 50 sind miteinander über einen Druckstangensteller 56 verbunden, der vorzugsweise elektrisch betätigt ausgelegt ist. Die beschriebene Anordnung bildet ebenfalls einen Teil des Kraftumsetzers 8, der die vom Stellmotor 4 oder von der Speicherfeder 24 veranlaßten Ausfahrbewegungen des Pleuels 20 in eine Bremszuspannbewegung der Bremsbeläge 12 in Richtung auf die Bremsscheibe 14 wandelt.

Der Gelenkbolzen des Gelenks 40 wird vorzugsweise durch einen Scherkraftmeßbolzen 58 gebildet. Der Scherkraftmeßbolzen 58 ist mit wenigstens einem aus Maßstabsgründen nicht dargestellten Meßaufnehmer zur Messung von Größen versehen, aus welchen die an den Bremsbelägen 12 wirkende Bremskraft mittelbar oder unmittelbar ableitbar ist. In bevorzugter Ausführungsform wird der Meßaufnehmer durch Dehnmeßstreifen (DMS) gebildet, die am Umfang des Scherkraftmeßbolzens 58 vorzugsweise durch Klebung derart befestigt sind, daß sie den aufgrund der gegensinnig wirkenden Scherkräfte hervorgerufenen Scherverformungen des Scherkraftmeßbolzens 58 proportionale Signale erzeugen. Anstatt am Scherkraftmeßbolzen 58 oder zusätzlich hierzu können auch ein oder mehrere Dehnmeßstreifen am Bremshebel 36 angeordnet sein, um aus den Verformungen des Bremshebels 36 die Bremskräfte ableiten zu können.

In einer eine DMS-Brückenschaltung beinhaltenden Auswerteelektronik findet eine Umrechnung der Scherverformungssignale in Signale für die jeweils an den Bremsbelägen 12 wirkende Ist-Zuspannkraft statt, welche über eine Signalleitung 59 an eine Steuer- und Regeleinrichtung 60 weitergeleitet werden, um anhand eines Soll-Ist-Vergleichs eine Regeldifferenz zwischen einer Soll-Zuspannkraft und der Ist-Zuspannkraft zu berechnen. Die Bremskraft-Sollwertvorgabe orientiert sich beispielsweise am Erreichen einer geforderten Soll-Zuspannkraft in möglichst kurzer Zeit, beispielsweise 75% der maximalen Zuspannkraft in 0,3 Sekunden.

Die Steuer- und Regeleinrichtung 60 steuert ein Leistungsteil 62 an, welches in Abhängigkeit der berechneten Regeldifferenz einen Betriebsstrom für den Stellmotor 4 aussteuert, der durch einen an eine zwischen dem Leistungsteil 62 und dem Stellmotor 4 verlaufende elektrische Leitung 64 angeschlossenen Stromsensor 66 gemessen wird, wobei eine Rückmeldung an die Steuer- und Regeleinrichtung 60 durch ein entsprechendes, über eine Signalleitung 68 rückgeführtes Motorstromsignal erfolgt. Außer zur Einregelung einer Soll-Zuspannkraft dienen die in die Steuer- und Regeleinrichtung 60 eingesteuerten Signale für die Ist-Zuspannkräfte und für den jeweiligen Motorstrom zur Überwachung der Krafteinsteuerung und Funktionsfähigkeit der Bremszuspanneinrichtung 1 bei sicherheitsrelevanten Bremsungen. Zur Verifizierung der Meßergebnisse kann auch der antriebsseitig durch den Stromsensor 66 gemessene Motorstrom in der Steuer- und Regeleinrichtung 60 mit dem Signal für die Ist-Zuspannkraft abgeglichen werden.

Ein in der Motorwicklung des Stellmotors 4 angeordneter Temperatursensor 70 dient zur Temperaturüberwachung während des Betriebs und liefert über eine Signalleitung 72 entsprechende Signale an die Steuer- und Regeleinrichtung 60. Zusätzlich können weitere Temperatursensoren zur Temperaturüberwachung von einzelnen oder mehreren Komponenten der Bremszuspanneinrichtung 1 vorgesehen sein, beispielsweise ein Temperatursensor zur Messung der Temperatur des Leistungsteils 62. Darüber hinaus kann auch ein Temperatursensor zur Messung der Umgebungstemperatur Werte an die Steuer- und Regeleinrichtung 60 liefem.

Die Bremszuspanneinrichtung 1 ist vorzugsweise zur Erzeugung von lastkorrigierten und/oder schlupfgeregelten Bremskräften ausgebildet, wobei unter einer lastkorrigierten Bremskraft eine im wesentlichen an das jeweils vorliegende Gewicht des Schienenfahrzeugs angepaßte Bremskraft und unter einer schlupfgeregelten Bremskraft eine Bremskraft verstanden werden soll, durch welche die Bremsung mit idealem Radschlupf erfolgt (Gleitschutzregelung). Hierzu weist Steuer- und Regeleinrichtung 60 entsprechende Regelfunktionen auf. Die Steuer- und Regelelektronik 60 ist vorzugsweise in einem separaten, aus Maßstabsgründen nicht gezeigten Gehäuse untergebracht, welches an das Aktuatorgehäuse 6 angeflanscht ist Alternativ hierzu könnte die Steuer- und Regelelektronik 60 aber auch fern der Bremszuspanneinrichtung in einem Wagen der S-Bahn angeordnet sein.

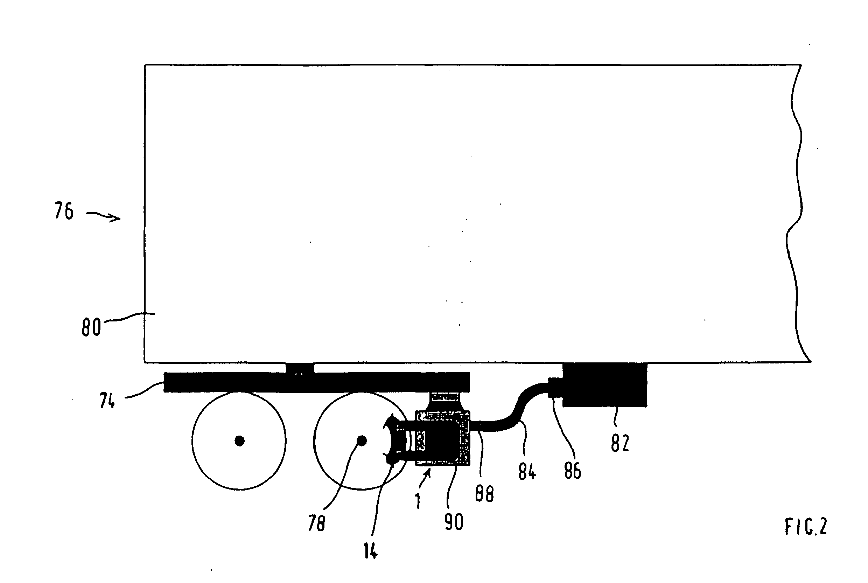

Wie Fig.2 zeigt, ist die Bremszuspanneinrichtung 1 an einem Drehgestell 74 eines Wagens 76 des Schienenfahrzeugs festgelegt, wobei die Bremsscheibe 14 mit einer am Drehgestell 74 gelagerten Achse 78 drehfest verbunden ist. Das Drehgestell 74 kann Dreh- und Vertikalbewegungen in Bezug zu einem Wagenkasten 80 des Wagens 76 ausführen. Eine energie- und/oder signalübertragende Verbindung der Bremszuspanneinrichtung 1 mit einem wagenkastenseitigen Anschluß 82, der mit zugeordneten Steuer-, Signalgeber- und/oder Energieversorgungseinrichtungen im Wagen 76 oder in einem anderen Wagen in Kontakt steht, erfolgt durch Bewegungen des Drehgestells 74 tolerierende elektrische Kabel und/oder Lichtwellenleiter, wie beispielsweise die elektrische Leitung 64 gemäß Fig.1, welche den Stellmotor 4 mit dem Leistungsteil 62 verbindet. Zumindest zwischen der Bremszuspanneinrichtung 1 und dem Wagenkasten 80 des Wagens 76 sind sämtliche elektrischen Kabel und/oder Lichtwellenleiter in einem einzigen Sammelkabel 84 zusammengefaßt, welches mit der Bremszuspanneinrichtung 1 und/oder mit dem wagenkastenseitigen Anschluß 82 lösbar verbunden ist.

Vorzugsweise sind beide Enden des Sammelkabels 84 sowohl wagenseitig als auch bremszuspanneinrichtungsseitig mittels je einer lösbaren Steck- oder Schraubverbindung 86, 88 anschließbar, wobei das Sammelkabel 84 die Entfernung zwischen einem am Boden des Wagenkastens 76 angeordneten Klemmkasten 82 und einem Gehäuse 90 der Bremszuspanneinrichtung 1 überbrückt Denkbar ist auch jegliche andere Art von lösbarer Verbindung. Die wagenseitige Steck- oder Schraubverbindung kann beispielsweise durch einen Steckverbinder 86 mit Schirmbügel und die bremszuspanneinrichtungsseitige Steckverbindung durch einen Rundstecker 88 mit Schirmauflage realisiert sein. Wie beim Sammelkabel 84, so sind auch bei den Steck- oder Schraubverbindungen 86, 88 sämtliche den einzelnen Kabeln und Leitungen zugeordneten Kontakte in jeweils einem einzigen Stecker bzw. in einer einzigen Buchse integriert. Alternativ könnte das Sammelkabel 84 auch mittels einer zuggesicherten Kabeldurchführung in das Gehäuse 90 der Bremszuspanneinrichtung 1 oder in den Klemmkasten 82 münden. Entscheidend ist, daß mindestens eine lösbare Verbindung 86, 88 für das Sammelkabel 84 vorhanden ist.

Der Klemmkasten 82 ist mit einer aus Maßstabsgründen nicht dargestellten Klemmenreihe versehen, in welche Enden von Kabeln und Leitungen münden, welche von den Steuer-, Signalgeber- und/oder Energieversorgungseinrichtungen hergeführt sind. Die einzelnen Klemmen der Klemmenreihe sind wiederum mit zugeordneten Kontakten der wagenseitigen lösbaren Verbindung 86 verbunden. Das Sammelkabel 84 ist länger als die kürzeste Verbindung zwischen der bremszuspanneinrichtungsseitigen und der wagenseitigen lösbaren Verbindung 86, 88, um eine ungehinderte Bewegung des Drehgestells 74 in Bezug zum Wagenkasten 80 zu ermöglichen.

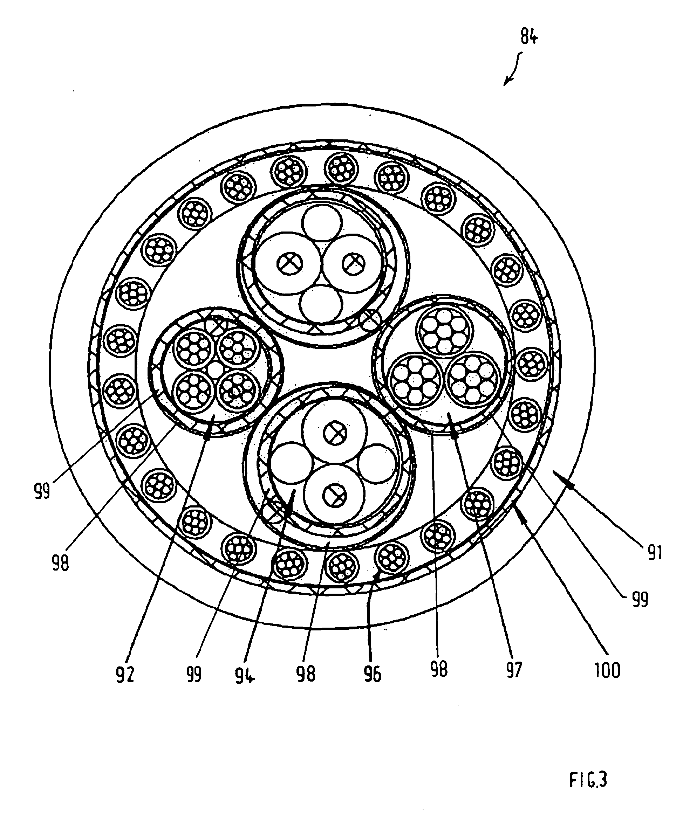

Das Sammelkabel 84 kann beispielsweise durch Bündelung einzelner, etwa gleich langer Kabel mittels Kabelbinder realisiert sein, wobei die Enden jeweils mit einem männlichen oder weiblichen Steckkontakt versehen sind. Vorzugsweise sind sämtliche Einzelkabel jedoch innerhalb eines einzigen Sammelkabelmantels 91 geführt, wie Fig.3 zeigt, in welcher eine bevorzugte Ausffihrungsform des Sammelkabels 84 dargestellt ist. Wie bereits erwähnt, dient das Sammelkabel 84 zur Leitung von Lichtwellen und analoger und/oder digitaler Signale, wobei in dem Sammelkabel 84 beispielsweise folgende Einzelkabel oder Einzelleitungen zusammengefaßt sind :
- mehrere Impulsgebersignal- und Versorgungskabel 92, welche in einer Gruppe mit eigenem Kabelmantel 98 und eigener Abschirmung 99 zusammengefaßt sind, welche Signale eines an der Radnabe angeordneten Impulsgebers zur Drehzahlmessung des Rades sowie die für den Impulsgeber notwendige elektrische Energie übertragen,
- mehrere Feldbuskabel 94 eines CAN-Busses aus Kupfer, welche in einer Gruppe mit eigenem Kabelmantel 98 und eigener Abschirmung 99 zusammengefaßt sind,
- Steuerleitungen 96 zum Auslösen von Sicherheits- und Parkbremsungen,
- mehrere Leitungen 97 zur Leistungsversorgung des Stellmotors mit eigenem Kabelmantel 98 und eigener Abschirmung 99.

Folglich sind gleichartige oder demselben Zweck dienende Kabel und Leitungen 92, 94, 96, 97 vorzugsweise in jeweils einer Gruppe mit eigenem Kabelmantel 98 und teilweise auch mit eigener Einzelabschirmung 99 innerhalb des Sammelkabelmantels 91 geführt. Der Sammelkabelmantel 91 ist vorzugsweise faserverstärkt, beispielsweise durch Metall- oder Karbonfasem, weiterhin ist ein Metallgestrick zur Verstärkung denkbar. Die radial innere Fläche des Sammelkabelmantels 91 ist mit einer durchgehenden Gesamtabschirmung 100 bedeckt, welche vorzugsweise aus geflochtenem und mit Vlies unterlegtem Abschirmmaterial besteht. Beispielsweise kann als Abschirmmaterial ein Metallgeflecht und/oder eine elektrisch leitende Folie verwendet werden.

Die Gesamtabschirmung 100 umgibt die Einzelabschirmungen 99 und ist von diesen durch eine oder mehrere Isolationsschichten getrennt, welche beispielsweise durch Luft und/oder ein anderes Isolationsmaterial und/oder durch die Kabelmäntel 98 der Gruppen 92, 94, 96, 97 von Kabeln gebildet wird. Weiterhin sind die Einzelabschirmungen 99 vorzugsweise durch die Kabelmäntel 98 ebenfalls voneinander isoliert Die Steuerleitungen 96 zum Auslösen von Sicherheits- und Parkbremsungen sind vorzugsweise längs der radial inneren Fläche der Gesamtabschirmung 100 mit Umfangsabstand angeordnet und umgeben die weiteren Kabel und Leitungen 92, 94, 97. Die in Fig.1 schematisch dargestellte Steuer- und Regelelektronik 60 ist bevorzugt in einem eigenen, am Gehäuse 90 der Bremszuspanneinrichtung 1 angeflanschten Gehäuse untergebracht Deshalb sind entsprechende Steuerleitungen hier nicht Bestandteil des Sammelkabels 84.

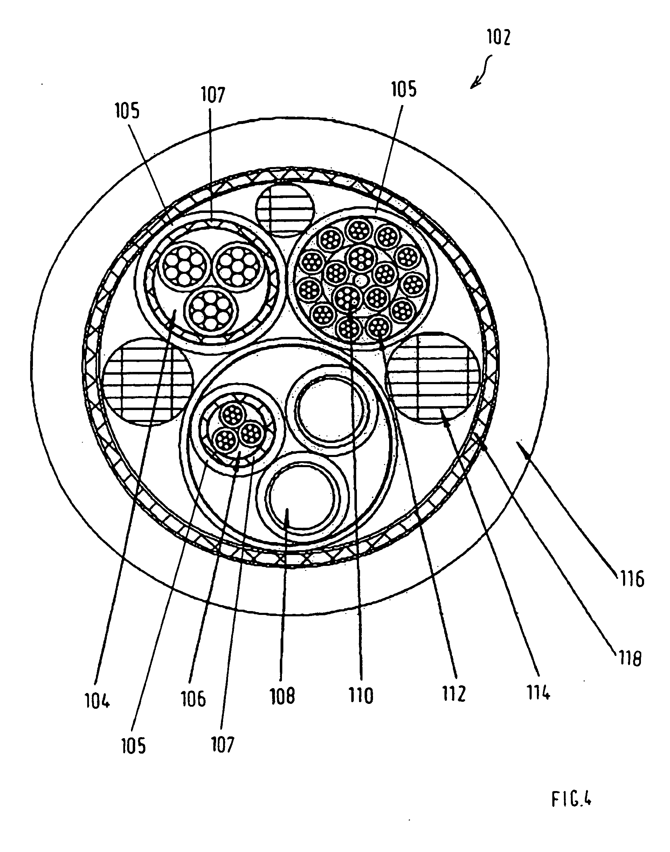

Eine weitere Ausführungsform eines Sammelkabels 102 ist in Fig.4 dargestellt, wobei in dem Sammelkabel 102 folgende Einzelkabel oder Einzelleitungen zusammengefaßt sind :
- mehrere Leistungsversorgungskabel 104 mit eigenem Kabelmantel 105 und eigener Abschirmung 107,
- mehrere Impulsgebersignal- und Versorgungskabel 106 mit eigenem Kabelmantel 105 und eigener Abschirmung 107,
- Feldbuskabel 108 als Lichtwellenleiter,
- Steuerleitungen 110 zur Ansteuerung und Versorgung einer elektrischen Hilfslöseeinrichtung sowie Steuerleitungen 112 zum Auslösen von Sicherheits- und Parkbremsungen mit eigenem Kabelmantel 105.

Für den Fall, daß die Steuer- und Regelelektronik 60 nicht wie bevorzugt am Gehäuse 90 der Bremszuspanneinrichtung 1 angeordnet, sondern fem von dieser beispielsweise in oder an einem Wagen des Schienenfahrzeugs, vorzugsweise an einem Unterboden des Wagenskastens angeordnet ist, können in dem Sammelkabel 102 auch die entsprechenden Steuerleitungen als elektrische Leitungen oder Lichtwellenleiter integriert sein.

Um eine kompakte Bauform zu erzielen, sind die Kabel und Leitungen 104, 106, 108, 110, 112 möglichst dicht gepackt, wobei die Zwischenräume mit einem Füllmaterial 114 ausgegossen sind oder Luft enthalten. Für den Sammelkabelmantel 116 und die Gesamtabschirmung 118 gelten die Ausführungen zu der vorangehend beschriebenen Ausführungsform. Zum zusätzlichen Schutz gegen mechanische Beschädigung kann der Sammelkabelmantel 116 einen weiteren Schutzüberzug aufweisen, beispielsweise in Form eines Schutzschlauches, welcher auch in den Sammelkabelmantel 116 selbst integriert sein kann. Sämtliche Kabelmäntel 105 und insbesondere der Sammelkabelmantel 116 bestehen aus einem Material, welches resistent gegenüber hohen Temperaturschwankungen, großen Verformungen, Schwingungen und Schlagbelastung ist.

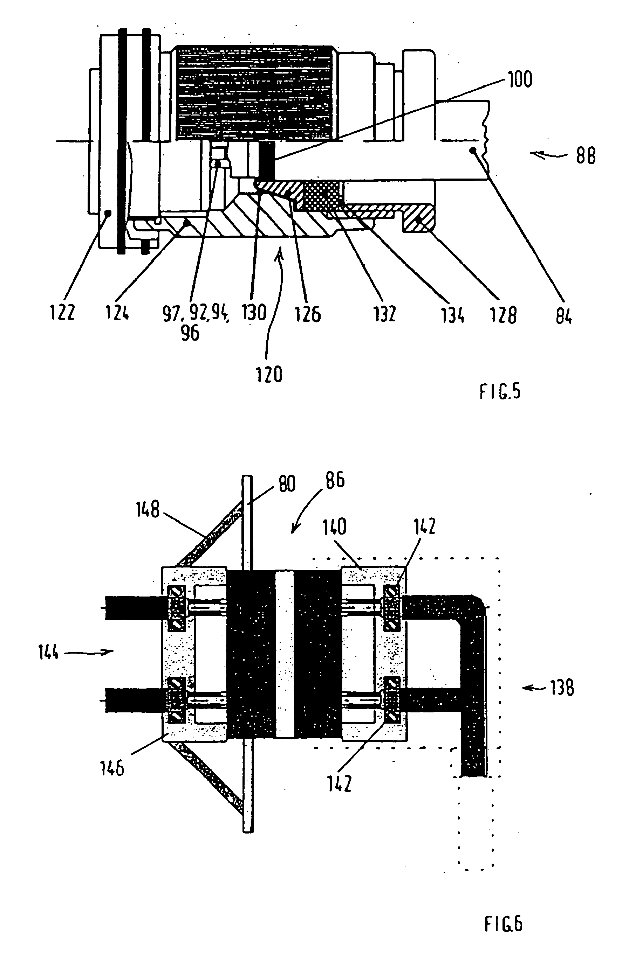

Die Gesamtabschirmung 100 des Sammelkabels 84 gemäß der bevorzugten Ausführung ist mittels des bremszuspanneinrichtungsseitigen Steckverbinders 88 mit der Masse des Drehgestells 74 elektrisch verbunden. Hierzu ist die Gesamtschirmung 100 an einer Schirmkabelverschraubung 120 eines Rundsteckers 122 des Steckverbinders 88 flächig geklemmt, wie aus Fig. 5 hervorgeht Der Rundstecker 122 weist eine Schirmauflage in Form eines Adapters 124 mit konusförmiger radial innerer Klemmfläche auf, gegen welchen ein Konusring 126 mit komplementär konisch ausgebildeter Klemmfläche mittels einer axialen Druckschraube 128 gespannt ist, um ein freigelegtes, nach radial außen umgebogenes Ende 130 der vorzugsweise aus Metallgeflecht bestehenden Gesamtabschirmung 100 zwischen den Klemmflächen zu klemmen. Vorzugsweise sind der Druckschraube 128 und dem Konusring 126 ein Gummiring 132 und eine Scheibe 134 axial zwischengeordnet. Die innerhalb der Gesamtabschirmung 100 verlaufenden elektrischen Kabel 92, 94, 96, 97 stehen mit nicht gezeigten Steckkontakten des Rundsteckers 122 in Verbindung. Der Adapter 124, der Konusring 126 und die Druckschraube 128 bestehen aus einem elektrisch leitfähigem Material und bilden zusammen die Schirmkabelverschraubung 120. Ein aus Maßstabsgründen in Fig.5 nicht gezeigter, am Gehäuse 90 der Bremszuspanneinrichtung 1 angeordneter Buchsenkörper einer Buchse besteht ebenfalls aus elektrisch leitendem Material und ist mit der Masse des Drehgestells 74 elektrisch leitend verbunden. Folglich gerät bei in die Buchse eingestecktem oder eingeschraubtem Rundstecker 122 die Schirmkabelverschraubung 120 mit dem Buchsengehäuse in Kontakt, so daß die Gesamtabschirmung 100 des Sammelkabels 84 durch das Drehgestell 74 geerdet wird. Weiterhin bildet die Schirmkabelverschraubung 120 und das Buchsengehäuse eine Fortsetzung der Gesamtabschirmung 100 des Sammelkabels 84. Die Einzelabschirmungen 99 der Gruppen 92, 94, 96, 97 von Kabeln und Leitungen sind jedoch gegenüber der Schirmkabelverschraubung 120 isoliert.

Andererseits sind die Einzelabschirmungen 99 der Gruppen 92, 94, 96, 97 von Kabeln und Leitungen mittels des wagenseitigen Steckverbinders 86 mit der Masse des Wagenkastens 80 elektrisch leitend verbunden. Hierzu ist ein am anderen Ende des Sammelkabels 84 angeordneter Stecker 138 mit einem elektrisch leitenden Schirmkontaktbügel 140 vorgesehen, an welchem die innerhalb des Sammelkabels 84 geführten und endseitig blank gelegten Einzelabschirmungen 99 durch Klemmschellen 142 geklemmt und mit ihm dadurch elektrisch leitend verbunden sind, wie Fig.6 zeigt. Hingegen ist die Gesamtabschirmung 100 gegenüber dem Schirmkontaktbügel 140 isoliert.

Der Stecker 138 ist in eine komplementäre, am Klemmkasten 82 des Wagenkastens 80 angeordnete Buchse 144 eingesteckt, deren Kontakte mit entsprechenden Klemmen der Klemmenreihe in Verbindung stehen. Durch den Steckverbinder 86 gerät der Schirmkontaktbügel 140 mit einem komplementären Schirmkontaktbügel 146 der Buchse 144 in elektrisch leitende Verbindung. Der Schirmkontaktbügel 146 ist seinerseits durch ein Masseband 148 mit dem Wagenkasten 80 elektrisch verbunden, so daß die Einzelabschirmungen 99 des Sammelkabels 84 an die Masse des Wagenkastens 80 gelegt sind.

Entscheidend ist, daß die Gesamtabschirmung 100 die Einzelabschirmungen 99 zumindest teilweise umgibt und gegenüber diesen elektrisch isoliert ist.

### Bezugszahlenliste

- 1: Bremszuspanneinrichtung
- 2: Bremsaktuator
- 4: Stellmotor
- 6: Aktuatorgehäuse
- 8: Kraftumsetzer
- 10: Bremsspindel
- 12: Bremsbelag
- 14: Bremsscheibe
- 16: Mutter-/Spindel-Baueinheit
- 18: Spindelmutter
- 20: Pleuel
- 22: Schiebehülse
- 24: Speicherfeder
- 26: Verriegelungseinrichtung
- 28: Pleuelkopf
- 36: Bremshebel
- 40: Gelenk
- 42: Spindelachse
- 46: Exzenterwelle
- 48: Zangenhebel
- 50: Zangenhebel
- 52: Bremszange
- 54: Belaghalter
- 56: Druckstangensteller
- 58: Scherkraftmeßbolzen
- 59: Signalleitung
- 60: Steuer- und Regeleinrichtung
- 62: Leistungsteil
- 64: elektrische Leitung
- 66: Stromsensor
- 68: Signalleitung
- 70: Temperatursensor
- 72: Signalleitung
- 74: Drehgestell
- 76: Wagen
- 78: Achse
- 80: Wagenkasten
- 82: Klemmkasten
- 84: Sammelkabel
- 86: Steckverbinder
- 88: Steckverbinder
- 90: Gehäuse
- 91: Sammelkabelmantel
- 92: Impulsgebersignal- und Versorgungskabel
- 94: Feldbuskabel
- 96: Steuerleitungen
- 97: Leitungen
- 98: Kabelmantel
- 99: Abschirmung
- 100: Gesamtabschirmung
- 102: Sammelkabel
- 104: Leistungsversorgungskabel
- 105: Kabelmantel
- 106: Impulsgeber- und Versorgungskabel
- 107: Abschirmung
- 108: Feldbuskabel
- 110: Steuerleitungen
- 112: Steuerleitungen
- 114: Füllmaterial
- 116: Sammelkabelmantel
- 118: Gesamtabschirmung
- 120: Schirmkabelverschraubung
- 122: Rundstecker
- 124: Adapter
- 126: Konusring
- 128: Druckschraube
- 130: Ende
- 132: Gummiring
- 134: Scheibe
- 138: Stecker
- 140: Schirmkontaktbügel
- 142: Klemmschellen
- 144: Buchse
- 146: Schirmkontaktbügel
- 148: Masseband

## Patentansprüche

1. Elektrische Verkabelung eines Schienenfahrzeugs, welche ein zwischen einem Wagenkasten (80) und einem Drehgestell (74) verlaufendes Sammelkabel beinhaltet, in welchem mehrere elektrische Kabel zusammengefaßt sind, wobei das Sammelkabel (84; 102) eine Gesamtabschirmung (100; 118) und wenigstens eines der elektrischen Kabel eine Einzelabschirmung (99; 107) aufweist, wobei letztere innerhalb der Gesamtabschirmung (100; 118) verläuft und von dieser durch eine oder mehrere Isolationsschichten (98; 105) getrennt ist, **dadurch gekennzeichnet, dass** die Einzelabschirmung (99; 107) an die Masse des Wagenkastens (80) und die Gesamtabschirmung (100; 118) an die Masse des Drehgestells (74) elektrisch leitend angeschlossen ist.

2. Verkabelung nach Anspruch 1, **dadurch gekennzeichnet, daß** die Isolationsschicht durch Luft und/oder ein anderes Isolationsmaterial (114) und/oder durch einen oder mehrere Kabelmäntel (98; 105) gebildet wird, innerhalb welchen jeweils eine Gruppe (92, 94, 96, 97;104, 106, 108, 110, 112) von elektrischen Kabeln geführt ist.

3. Verkabelung nach Anspruch 2, **dadurch gekennzeichnet, daß** wenigstens einige der Kabelmäntel (98; 105) der Gruppen (92, 94, 96, 97;104, 106, 108, 110, 112) von elektrischen Kabeln mit gegeneinander elektrisch isolierten Einzelabschirmungen (99; 107) versehen sind.

4. Verkabelung nach Anspruch 3, **dadurch gekennzeichnet, daß** sämtliche elektrischen Kabel und/oder Gruppen (92, 94, 96, 97;104, 106, 108, 110, 112) von elektrischen Kabeln innerhalb eines Sammelkabelmantels (91; 116) des Sammelkabels (84; 102) geführt sind, welcher mit der Gesamtabschirmung (100; 118) versehen ist.

5. Verkabelung nach Anspruch 4, **dadurch gekennzeichnet, daß** die Gesamtabschirmung (100; 118) an der radial inneren Umfangsfläche des Sammelkabelmantels (91; 116) angeordnet ist.

6. Verkabelung nach einem der vorhergehenden Ansprüche, **dadurch gekennzeichnet, daß** die Gesamtabschirmung (100; 118) und/oder die Einzelabschirmungen (99; 107) ein Metallgeflecht und/oder eine elektrisch leitende Folie beinhalten.

7. Verkabelung nach einem der vorhergehenden Ansprüche, **dadurch gekennzeichnet, daß** das Sammelkabel (84; 102) zwischen einem an einem Wagenkasten (80) eines Wagens (76) eines Schienenfahrzeugs angeordneten Anschluß (82) und einer an einem Drehgestell (74) des Wagens (76) angeordneten Bremszuspanneinrichtung (1) verläuft und zur Verbindung letzterer mit Steuer-, Signalgeber- und/oder Energieversorgungseinrichtungen (62) dient.

8. Verkabelung nach Anspruch 7, **dadurch gekennzeichnet, daß** wenigstens ein Ende des Sammelkabels (84; 102) mittels einer lösbaren Verbindung (86, 88) am Wagenkasten (80) oder an der Bremszuspanneinrichtung (1) befestigt ist.

9. Verkabelung nach Anspruch 8, **dadurch gekennzeichnet, daß** die wagenseitige lösbare Verbindung und eine bremszuspanneinrichtungsseitige Verbindung durch je einen Steckverbinder (86; 88) gebildet wird.

10. Verkabelung nach Anspruch 9, **dadurch gekennzeichnet, daß** die Gesamtabschirmung (100; 118) mittels des bremszuspanneinrichtungsseitigen Steckverbinders (88) an die Masse des Drehgestells (74) angeschlossen ist.

11. Verkabelung nach Anspruch 10, **dadurch gekennzeichnet, daß** die Gesamtabschirmung (100; 118) an einem elektrisch leitenden Steckergehäuses (122, 124, 132, 134) eines Steckers (120) des bremszuspanneinrichtungsseitigen Steckverbinders (88) flächig geklemmt ist.

12. Verkabelung nach Anspruch 11, **dadurch gekennzeichnet, daß** die Einzelschirme (99; 107) mittels des wagenseitigen Steckverbinders (86) an die Masse des Wagenkastens (80) angeschlossen sind.

## Claims

1. Electric wiring system for a railway vehicle, comprising a cable loom running between a carriage body (80) and a bogie (74), in which several electric cables are collected together, such that the loom (84; 102) has an overall screening (100; 118) and at least one of the electric cables has an individual screening (99; 107), the latter running inside the overall screening (100; 118) and being separated therefore by one or more insulating layers (98; 105), **characterised in that** the individual screening (99; 107) is electrically connected to the earth of the carriage body (80) and the overall screening (100; 118) is connected to the earth of the bogie (74).

2. Wiring system according to Claim 1, **characterised in that** the insulating layer is formed by air and/or by another insulating material (114) and/or by one or more cable sheaths (98; 105), within each of which passes a group (92, 94, 96, 97; 104, 106, 108, 110, 112) of electric cables.

3. Wiring system according to Claim 2, **characterised in that** at least some of the cable sheaths (98; 105) of the groups (92, 94, 96, 97; 104, 106, 108, 110, 112) of electric cables are provided with individual screenings (99; 107) electrically insulated from one another.

4. Wiring system according to Claim 3, **characterised in that** all the electric cables and/or groups (92, 94, 96, 97; 104, 106, 108, 110, 112) of electric cables pass inside a loom sheath (91; 116) of the cable loom (84; 102), which is provided with the overall screening (100; 118).

5. Wiring system according to Claim 4, **characterised in that** the overall screening (100; 118) is arranged on the radially inner circumferential surface of the cable loom sheath (91; 116).

6. Wiring system according to any of the preceding claims, **characterised in that** the overall screening (100; 118) and/or the individual screenings (99; 107) comprise a metal gauze and/or electrically conducting foil.

7. Wiring system according to any of the preceding claims, **characterised in that** the cable loom (84; 102) extends between a connector (82) arranged on a carriage body (80) of a carriage (76) of a rail vehicle and a brake application device (1) arranged on a bogie (74) of the carriage (76), and serves to connect the latter with control, signal-emitting and/or energy supply devices (62).

8. Wiring system according to Claim 7, **characterised in that** at least one end of the cable loom (94; 102) is attached to the carriage body (80) or to the brake application device (1) by means of a releasable connection (86, 88).

9. Wiring system according to Claim 8, **characterised in that** the releasable connection on the carriage and a connection on the brake application device each consist of a plug connector (86; 88).

10. Wiring system according to Claim 9, **characterised in that** the overall screening (100; 118) is connected to the earth of the bogie (74) by means of the plug connector (88) on the brake application device.

11. Wiring system according to Claim 10, **characterised in that** the overall screening (100; 118) is clamped in full contact with an electrically conductive plug housing (122, 124, 132, 134) of a plug (120) of the plug connector (88) on the brake application device.

12. Wiring system according to Claim 11, **characterised in that** the individual screenings (99; 107) are connected to the earth of the carriage body (80) by means of the plug connector (86) on the carriage.

## Revendications

1. Câblage électrique d'un véhicule ferroviaire, qui comporte un câble collecteur qui s'étend entre une caisse (80) de matériel roulant et un bogie (74) et dans lequel sont rassemblés plusieurs câbles électriques, le câble (84, 102) collecteur ayant un blindage (100, 118) global et au moins l'un des câbles électriques ayant un blindage (99, 107) individuel, ce dernier s'étendant à l'intérieur du blindage (100, 118) global et en étant séparé par une ou par plusieurs couches (98, 105) isolantes, **caractérisé en ce que** le blindage (99, 107) individuel est relié d'une manière conductrice de l'électricité à la masse de la caisse (80) de matériel roulant et le blindage (100, 118) global à la masse du bogie (74).

2. Câblage suivant la revendication 1, **caractérisé en ce que** la couche isolante est formée par de l'air et/ou par une autre matière (114) isolante et/ou par une ou par plusieurs gaines (98, 105) de câbles à l'intérieur desquelles passent respectivement un groupe (92, 94, 96, 97, 104, 106, 108, 110, 112) de câbles électriques.

3. Câblage suivant la revendication 2, **caractérisé en ce qu'**au moins certaines des gaines (98, 105) de câbles des groupes (92, 94, 96, 97, 104, 106, 108, 110, 112) de câbles électriques sont munis de blindages (99, 107) individuels mutuellement isolés du point de vue électrique.

4. Câblage suivant la revendication 3, **caractérisé en ce que** l'ensemble des câbles électriques et/ou des groupes (92, 94, 96, 97, 104, 106, 108, 110, 112) de câbles électriques passe à l'intérieur d'une gaine (91, 116) du câble (84, 102) collecteur qui est muni du blindage (100, 118) global.

5. Câblage suivant la revendication 4, **caractérisé en ce que** le blindage (100, 118) global est disposé sur la surface de pourtour intérieur radialement de la gaine (91, 116) de câble global.

6. Câblage suivant l'une des revendications précédentes, **caractérisé en ce que** le blindage (100, 118) global et/ou les blindages (99, 107) individuels comprennent une toile métallique et/ou une feuille conductrice d'électricité.

7. Câblage suivant l'une des revendications précédentes, **caractérisé en ce que** le câble (84, 102) collecteur s'étend entre une bande (82) disposée sur une caisse (80) d'un matériel roulant (76) d'un véhicule ferroviaire et un dispositif (1) de serrage de frein disposé sur un bogie (74) de la caisse (76) et sert à relier ce dispositif à des dispositifs (62) de commande d'émission de signal et/ou d'alimentation en courant.

8. Câblage suivant la revendication 7, **caractérisé en ce qu'**au moins une extrémité du câble (84, 102) collecteur est fixée au moyen d'une liaison (86, 88) amovible à la caisse (80) du matériel roulant ou au dispositif (1) de serrage de frein.

9. Câblage suivant la revendication 8, **caractérisé en ce que** la liaison amovible du côté caisse et une liaison du côté du dispositif de serrage de frein sont formées par, respectivement, un connecteur (86, 88) à enfichage.

10. Câblage suivant la revendication 9, **caractérisé en ce que** le blindage (100, 118) global est raccordé à la masse du bogie (74) au moyen du connecteur (88) à enfichage, côté dispositif serrage de frein.

11. Câblage suivant la revendication 10, **caractérisé en ce que** le blindage (100, 118) global est pincé à plat sur un boîtier (122, 124, 132, 134) d'une fiche (120) du connecteur (88) à enfichage côté dispositif serrage de frein.

12. Câblage suivant la revendication 11, **caractérisé en ce que** les blindages (99, 107) individuels sont raccordés à la masse de la caisse (80) de matériel roulant au moyen du connecteur (86) à enfichage côté caisse.
